(19) Europäisches Patentamt / European Patent Office / Office européen des brevets

(11) **EP 2 499 205 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **10774228.0**

(22) Anmeldetag: **09.11.2010**

(51) Int Cl.:
*C09D 5/10* (2006.01)   *B22F 1/00* (2006.01)
*B22F 7/04* (2006.01)   *C22C 21/16* (2006.01)
*C23F 13/06* (2006.01)   *C22C 18/00* (2006.01)

(86) Internationale Anmeldenummer:
**PCT/EP2010/067149**

(87) Internationale Veröffentlichungsnummer:
**WO 2011/058021 (19.05.2011 Gazette 2011/20)**

(54) **KORROSIONSSCHUTZBESCHICHTUNGEN, INSBESONDERE FÜR METALLE AUSGEWÄHLT AUS DER GRUPPE BESTEHEND AUS ALUMINIUM, ALUMINIUMLEGIERUNGEN, STAHL UND MIT EINEM ZINKHALTIGEN ÜBERZUG VERSEHENEM STAHL, UND MISCHUNGEN ZU IHRER HERSTELLUNG**

CORROSION PROTECTION COATINGS, IN PARTICULAR FOR METALS, SELECTED FROM THE GROUP MADE UP OF ALUMINUM, ALUMINUM ALLOYS, STEEL, AND STEEL HAVING A COATING COMPRISING ZINC, AND MIXTURES FOR THE PRODUCTION THEREOF

REVÊTEMENTS ANTICORROSION, NOTAMMENT POUR MÉTAUX CHOISIS DANS LE GROUPE CONSTITUÉ PAR L'ALUMINIUM, LES ALLIAGES D'ALUMINIUM, L'ACIER ET L'ACIER MUNI D'UN REVÊTEMENT CONTENANT DU ZINC, ET MÉLANGES POUR LEUR FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2009 DE 102009052399**

(43) Veröffentlichungstag der Anmeldung:
**19.09.2012 Patentblatt 2012/38**

(73) Patentinhaber: **ECKART GmbH**
**91235 Hartenstein (DE)**

(72) Erfinder:
• **PLAGEMANN, Peter**
**28329 Bremen (DE)**
• **ZOCKOLL, Anja**
**45277 Essen (DE)**
• **WEISE, Jörg**
**28199 Bremen (DE)**

(74) Vertreter: **Altana IP Department**
**Altana Management Services GmbH**
**Abelstraße 45**
**46483 Wesel (DE)**

(56) Entgegenhaltungen:
EP-A1- 1 741 760   WO-A1-2005/051551
DE-A1- 1 519 208   DE-A1- 3 232 755
US-A- 2 877 126   US-A- 3 231 535
US-A- 3 399 160   US-A1- 2004 206 266
US-B1- 6 627 065

• DATABASE WPI Week 199016 Thomson Scientific, London, GB; AN 1990-121485 XP002618652, & JP 2 073932 A (KOBE STEEL LTD) 13. März 1990 (1990-03-13)
• DATABASE WPI Week 200605, Derwent Publications Ltd., London, GB; AN 2006-047235 -& WO 2005 116148 A1 (NIPPON STEEL CORP) 08 Dezember 2005
• DATABASE WPI Week 200011, Derwent Publications Ltd., London, GB; AN 2000-119548 -& JP H11 343 422 A (MITSUI KINZOKU TORYO KAGAKU KK) 14 Dezember 1999 -& DATABASE CA [Online] CHEMICAL ABSTRACTS SERVICE, COLUMBUS, OHIO, US SETO, HIDEAKI ET AL: 'Rust prevention pigment for organic anticorrosive paint' Retrieved from STN Database accession no. 1999:787693

**Beschreibung**

Die vorliegende Erfindung betrifft einen Gegenstand umfassend einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen und eine Korrosionsschutzbeschichtung, sowie die Verwendung einer Mischung zur Herstellung einer Korrosionsschutzbeschichtung für den Korrosionsschutz von Metallen aus der Gruppe bestehend aus Aluminium und Aluminiumlegierungen, ein Verfahren zur Herstellung einer Korrosionsschutzbeschichtung auf einer Oberfläche eines Metalls ausgewählt aus der Gruppe bestehend aus Aluminium und Aluminiumlegierungen, und die Verwendung einer Korrosionsschutzbeschichtung für den Korrosionsschutz von Bauteilen aus Metallen ausgewählt aus der Gruppe bestehend aus Aluminium und Aluminiumlegierungen.

Die Korrosion eines Bauteils aus Metall führt dazu, dass seine Funktionsfähigkeit deutlich eingeschränkt ist und hat außerdem den Nachteil, dass das Erscheinungsbild der Metalloberfläche leidet. Viele Bauteile aus Metall werden deshalb mit (in der Regel organischen) Schichten versehen, um die Korrosionsprozesse zu verlangsamen oder soweit möglich zu verhindern. Insbesondere Bauteile aus Aluminium und Aluminiumlegierungen sind häufig auf Korrosionsschutzmaßnahmen angewiesen. Aluminiumlegierungen, insbesondere solche des Systems Al-Cu (2000er Legierungen) unterliegen einem verstärkten Korrosionsangriff, weil die zulegierten Elemente, welche die Festigkeit der Legierung verbessern, den Korrosionswiderstand durch die Bildung von mikroskopischen Lokalelementen verringern. Auf der anderen Seite werden gerade solche Legierungen aufgrund ihrer guten mechanischen Eigenschaften häufig im Luftfahrtsbereich eingesetzt, wo besonders strenge Anforderungen an das Korrosionsverhalten gelten.

Der unedle Charakter von Aluminium und seinen Legierungen schränkt die Wahl von geeigneten Korrosionsschutzpigmenten stark ein. Beispielswiese Zinkstaub, der erfolgreich als aktives Korrosionsschutzpigment in Grundierungen zum Schutz von Stahloberflächen eingesetzt wird, ist für den Korrosionsschutz von Aluminium-Substraten nicht geeignet, da Zink ein positiveres elektrochemisches Potential als Aluminium besitzt und so die Korrosionsreaktion des Aluminiums forcieren würde. Daher werden zum Korrosionsschutz von Aluminium und seinen Legierungen häufig Korrosionsschutzpigmente auf Inhibitorbasis zum Einsatz. Hier sind insbesondere Pigmente auf Basis von sechswertigem Chrom zu nennen, die einen vorzüglichen Korrosionsschutz bieten, allerdings aus gesundheitlichen und ökologischen Gründen in den meisten technischen Bereichen mittlerweile verboten sind.

Die WO 2005/051551 beschreibt die Verwendung von Pigmenten auf Magnesiumbasis zum Korrosionsschutz von Aluminiumbauteilen. Derartige Pigmente haben aber den Nachteil, dass Magnesiumpulver sehr reaktiv ist und daher speziell oberflächenoxidierte Pulverqualitäten zum Einsatz kommen müssen. Weiterhin sind für derartige Pulver verschiedenste Sicherheitsmaßnahmen bei der Handhabung zu beachten.

Die Aufgabe der vorliegenden Erfindung besteht darin, eine Korrosionsschutzbeschichtung bereitzustellen, die einen wirksameren Korrosionsschutz, insbesondere einen effektiven kathodischen Korrosionsschutz von Bauteilen aus Metallen ausgewählt aus der Gruppe bestehend aus Aluminium und Aluminiumlegierungen, gewährleistet. Bevorzugt sollten diese Korrosionsschutzbeschichtung und die Mischung zu ihrer Herstellung außerdem umweltfreundlich sein, insbesondere keine Chromverbindungen enthalten.

Zur Lösung dieser Aufgabe wird gemäß Anspruch 1 ein Gegenstand vorgeschlagen umfassend einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen, und eine Korrosionsschutzbeschichtung n umfassend

- ein ggf. ausgehärtetes Bindemittel oder Bindemittelsystem,

- in dem ggf. ausgehärteten Bindemittel oder Bindemittelsystem verteilte Partikel eines Korrosionsschutzpigments aus einer Legierung aus Zink und Magnesium mit einem Zinkgehalt von 74 bis 90 Gew.-%, besonders bevorzugt 80 Gew.-% oder weniger, weiter bevorzugt 74 bis 80 Gew.-%, und insbesondere 74 Gew.-%,

- vorzugsweise keine Chromverbindungen, insbesondere kein Chromat,

- ggf. weitere partikelförmige Feststoffe,

  wobei der volumenbezogene Anteil der Partikel des besagten Korrosionsschutzpigments an der Gesamtheit der in der Korrosionsschutzbeschichtung vorhandenen Feststoffpartikel 70 % oder mehr, bevorzugt 80 % oder mehr, weiter bevorzugt 90 % und besonders bevorzugt 95 % oder mehr beträgt,

  wobei die Pigmentvolumenkonzentration in der Korrosionsschutzbeschichtung 90 bis 110 % der zum Erreichen der Perkolationsschwelle nötigen Pigmentvolumenkonzentration beträgt,

wobei die Partikel des besagten Korrosionsschutzpigments lamellenförmige Partikel sind,

wobei die Korrosionsschutzbeschichtung den aus Metall bestehenden Grundkörper bzw. die metallischen Bereiche des Grundkörpers zumindest teilweise bedeckt.

Wird ein Korrosionsschutzpigment eingesetzt, dessen Partikel im wesentlichen sphärisch sind (nicht erfindungsgemäß), dann beträgt die Pigmentvolumenkonzentration in der Korrosionsschutzbeschichtung vorzugsweise 90 bis 110 % der kritischen Pigmentvolumenkonzentration.

Weiterhin betrifft die Erfindung die Verwendung einer Mischung zur Herstellung einer Korrosionsschutzbeschichtung für den Korrosionsschutz von Metallen ausgewählt aus der Gruppe bestehend aus Aluminium und Aluminiumlegierungen, umfassend

- ein Bindemittel oder Bindemittelsystem,

- in dem Bindemittel oder Bindemittelsystem verteilte Partikel eines Korrosionsschutzpigments aus einer Legierung aus Zink und Magnesium mit einem Zinkgehalt von 74 bis 90 Gew.-%, besonders bevorzugt 80 Gew.-% oder weniger, weiter bevorzugt 74 bis 80 Gew.-%, und insbesondere 74 Gew.-%,

- vorzugsweise keine Chromverbindungen, insbesondere kein Chromat,

- ggf. ein oder mehrere Lösungsmittel,

- ggf. weitere partikelförmige Feststoffe,

wobei der volumenbezogene Anteil der Partikel des besagten Korrosionsschutzpigments an der Gesamtheit der in der Mischung vorhandenen Feststoffpartikel 70 % oder mehr, bevorzugt 80 % oder mehr, weiter bevorzugt 90 % oder mehr, und besonders bevorzugt 95 % oder mehr beträgt,

wobei die auf die nichtflüchtigen Bestandteile der Mischung bezogene Pigmentvolumenkonzentration 90 bis 110 % der zum Erreichen der Perkolationsschwelle nötigen Pigmentvolumenkonzentration beträgt,

wobei die auf die nichtflüchtigen Bestandteile der Mischung bezogene Pigmentvolumenkonzentration 90 bis 110 % der zum Erreichen der Perkolationsschwelle nötigen Pigmentvolumenkonzentration beträgt,

wobei die Partikel des besagten Korrosionsschutzpigments lamellenförmige Partikel sind.

Wird eine Mischung umfassend ein Korrosionsschutzpigment eingesetzt, dessen Partikel im Wesentlichen sphärisch sind (nicht erfindungsgemäß), dann beträgt die auf die nichtflüchtigen Bestandteile der Mischung bezogene Pigmentvolumenkonzentration vorzugsweise 90 bis 110 % der kritischen Pigmentvolumenkonzentration.

Weiterhin betrifft die vorliegende Erfindung Verfahren zur Herstellung einer Korrosionsschutzbeschichtung, sowie die Verwendung einer Korrosionsschutzbeschichtung.

Weitere Ausführungsformen, Details und Vorteile der Erfindung sind der nachfolgenden detaillierten Beschreibung, den Ausführungsbeispielen, den Ansprüchen und den Figuren zu entnehmen. Die Figuren zeigen:

Figur 1:  Korrosionspotentiale der erfindungsgemäß eingesetzten Korrosionsschutzpigmente im Vergleich zu zwei unterschiedlichen Aluminiumlegierungen (AA 2024, AA 5754), Aluminium (99,5% rein) und Zink

Figur 2:  Proben des Ausführungsbeispiel 1 nach 3000 Stunden (links) und 10000 Stunden (rechts) Salzsprühnebeltest

Figur 3:  Proben des Ausführungsbeispiels 2 nach 3000 Stunden Salzsprühnebeltest

Figur 4:  Proben des Ausführungsbeispiels 3 nach 10000 Stunden Salzsprühnebeltest

Figur 5:  Proben des Vergleichsbeispiels nach 3000 Stunden Salzsprühnebeltest

Figur 6:  Ruhepotentiale von unlegiertem Stahl, der nicht erfindungsgemäßen Ausführungsbeispiele 4 und 5 und des Vergleichsbeispiels 2 in wässriger Natriumchlorid-Lösung (3 Gew.-% NaCl)

Figur 7: Ruhepotentiale von verzinktem Stahl, des nicht erfindungsgemäßen Ausführungsbeispiels 6 und des Vergleichsbeispiels 3 in wässriger Natriumchlorid-Lösung (3 Gew.-% NaCl)

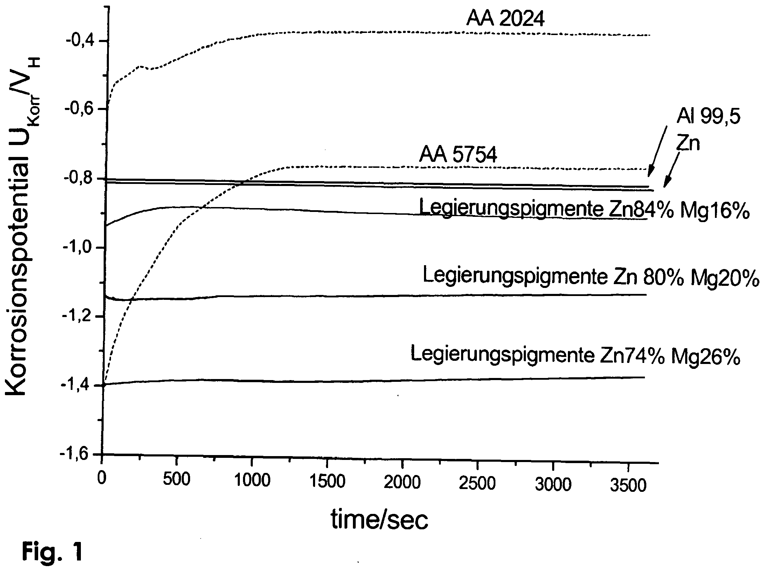

Das erfindungsgemäß in der Korrosionsschutzbeschichtung und in der Mischung zu ihrer Herstellung eingesetzte Korrosionsschutzpigment besteht aus einer Legierung aus Zink und Magnesium, wobei der Zinkgehalt der Legierung 74 bis 90 Gew.-%, besonders bevorzugt 80 Gew.-% oder weniger, weiter bevorzugt 74 bis 80 Gew.-%, und insbesondere 74 Gew.-% beträgt. Korrosionsschutzpigmente dieser Zusammensetzung ermöglichen einen kathodischen Korrosionsschutz von Aluminiumsubstraten, da ihr Korrosionspotential negativer ist als das des Aluminiums, siehe Figur 1. Das bedeutet, dass das erfindungsgemäß in der Korrosionsschutzbeschichtung eingesetzte Korrosionsschutzpigment unedler ist als das Aluminiumsubstrat und daher gegenüber Aluminium als Opferanode wirken kann. Derartige Korrosionsschutzbeschichtungen sind für den Korrosionsschutz sämtlicher Metalle und Legierungen geeignet, die ein im Vergleich zu den Korrosionsschutzpigmenten positiveres Korrosionspotential aufweisen. Korrosionsschutzpigmente, die sich unedler verhalten, also ein negativeres Korrosionspotential haben als das darunterliegende Metallsubstrat, sind besonders vorteilhaft, denn bei einer Freilegung des Metallsubstrats durch Verletzung der Korrosionsschutzbeschichtung wird ein kathodischer Korrosionsschutz wirksam, und das Metallsubstrat ist trotz der Verletzung der Korrosionsschutzbeschichtung weiterhin geschützt.

Beispiele für weitere Metalle, für die die hier beschriebene Korrosionsschutzbeschichtung geeignet ist, sind Stahl (nicht erfindungsgemäß) und mit einem zinkhaltigen Überzug versehener Stahl. Unter "mit einem zinkhaltigen Überzug versehener Stahl" wird im Rahmen der vorliegenden Beschreibung sowohl verzinkter Stahl verstanden als auch Stahl mit einem metallischem Überzug, der einen maßgeblichen Anteil an Zink enthält, wie z. B. Galvan®, welches neben Zink noch etwa 5 Gew.-% Aluminium enthält (erfindungsgemäß), oder z. B. ein Galvalume®-Überzug, der neben Zink noch 55 Gew.-% Aluminium und 1,6 Gew.-% Silizium enthält (erfindungsgemäß). Hinsichtlich der erfindungsgemäßen Anwendung der Korrosionsschutzbeschichtung auf verschiedene Substrate ist anzumerken, dass nicht jede Beschichtung für jedes Substrat gleichermaßen gut geeignet sein muss. Für den Fachmann ist es jedoch auf der Basis seines Fachwissens und durch einfache Tests ohne unzumutbaren Aufwand möglich, für jedes der o.g. Substrate die am besten geeignete Korrosionsschutzbeschichtung zu identifizieren.

Die erfindungsgemäß einzusetzenden Korrosionsschutzpigmente sind Legierungen aus Zink und Magnesium. D.h. es liegt nicht nur eine einfache Mischung von zwei Metallpulvern vor, vielmehr wird eine Legierung erstellt, die aus neuen Phasen z. B. intermetallische Phasen, besteht. Bevorzugt enthält das Korrosionsschutzpigment der Korrosionsschutzbeschichtung intermetallische Phasen, besonders bevorzugt die intermetallische Phase MgZn.

Der Anteil intermetallischer Phasen an der erfindungsgemäß als Korrosionsschutzpigment einzusetzenden Legierung beträgt üblicherweise 40 Gew.-% oder mehr. Die Legierung kann sowohl im thermodynamischen Gleichgewicht (thermodynamisch stabil) als auch in Form von Nichtgleichgewichtsphasen vorliegen. Das Auftreten von Nichtgleichgewichtsphasen kann insbesondere durch die Herstellungsverfahren und -bedingungen verursacht werden, so z.B. durch eine schnelle Abkühlung von gegossenen Blöcken, die anschließend zu Pulver zermahlen werden, oder durch die Pulverherstellung durch Verdüsen. Diese Verfahren sind Stand der Technik.

Die Partikel des erfindungsgemäß eingesetzten Korrosionsschutzpigments werden z.B. durch Versprühen (Verdüsen) der entsprechenden Zink-Magnesium-Legierung unter Inertgas hergestellt. Mit dieser Herstellungsmethode sind Partikel mit kleinen Abmessungen bei einer engen Partikelgrößenverteilung und annähernd sphärischer Form erhältlich (nicht erfindungsgemäß).

In der erfindungsgemäß zu verwendenden Korrosionsschutzbeschichtung sowie in der erfindungsgemäß zu verwendenden Mischung zu ihrer Herstellung weisen vorzugsweise mindestens 50 % der Partikel des Korrosionsschutzpigments, bevorzugt mindestens 90 % der Partikel des Korrosionsschutzpigments eine größte Abmessung zwischen 1 und 100 $\mu$m auf, bevorzugt zwischen 10 und 20 $\mu$m, gemessen mittels Laserbeugung mit einem Coulter LS Partikelgrößenanalysator.

Die Partikel des Korrosionsschutzpigments haben in einer Richtung im Vergleich zu den anderen beiden Richtungen oder in zwei Richtungen eine im Vergleich zur dritten Richtung signifikant größere, bevorzugt um mindestens eine Größenordnung größere Ausdehnung. Beispiele für Partikel, die in zwei Richtungen eine im Vergleich zur dritten Richtung signifikant größere Ausdehnung aufweisen, sind blättchenförmige (lamellenförmige) Partikel.

Es wurde festgestellt, dass Pigmente aus einer Legierung bestehend aus 74 Gew.-% Zink und 26 Gew.-% Magnesium besonders gut als Korrosionsschutzpigment für Aluminiumsubstrate geeignet sind. Eine Legierung dieser Zusammensetzung enthält die intermetallische Phase MgZn.

Ein wesentlicher Vorteil des erfindungsgemäß einzusetzenden Korrosionsschutzpigments aus einer Legierung aus Zink und Magnesium mit einem Zinkgehalt von 74 bis 90 Gew.-%, besonders bevorzugt 80 Gew.-% oder weniger, weiter bevorzugt 74 bis 80 Gew.-%, und insbesondere 74 Gew.-% gegenüber den aus dem Stand der Technik für den Korrosionsschutz von Aluminiumsubstraten bekannten Pigmenten aus Magnesium besteht darin, dass sich bei der Korrosion des Zinks Oxidationsprodukte bilden, die ein größeres Volumen einnehmen als das metallische Zink, während die Oxidationsprodukte des Magnesiums ein kleineres Volumen einnehmen als das metallische Magnesium. Aufgrund des hohen Zinkanteils der erfindungsgemäß einzusetzenden Korrosionsschutzpigmente werden voluminöse Korrosionsprodukte gebildet, so dass eine effiziente Barriereschicht erzeugt wird, d.h. in der Beschichtung werden die Leitungspfade für den Ionentransport blockiert. Mit den Zusammensetzungen nach der WO 2005/051551 A1 wird aufgrund der geringen Dichte des Leichtmetalls Magnesium und seiner Korrosionsprodukte eine solche Barrierewirkung nicht oder in nur geringem Umfang erreicht.

In der erfindungsgemäß zu verwendenden Korrosionsschutzbeschichtung liegen die Partikel des Korrosionsschutzpigments in einem ggf. ausgehärteten Bindemittel oder Bindemittelsystem verteilt vor. Unter "Aushärten des Bindemittels" wird das Überführen des ursprünglich schmelzbaren und plastisch verformbaren Bindemittels in einen harten und unschmelzbaren Zustand bezeichnet. Die Härtung wird meist durch Härter (Vernetzer) ausgelöst, die entweder eine als Kettenreaktion verlaufende Vernetzung der in den Harzen vorhandenen reaktiven Gruppen initiieren oder in stöchiometrischen Mengen mit reaktiven Gruppen des Harzes in Polyadditions- oder PolykondensationsReaktionen vernetzen. Die Härtung kann aber auch z.B. durch Luftfeuchtigkeit, Wärme (bei thermisch nachvernetzbaren Produkten) oder Strahlung erfolgen.

Der erfindungsgemäß zu verwendenden Mischung zur Herstellung der Korrosionsschutzbeschichtung wird ein als Bindemittel geeignetes polymeres Material (z.B. Polymer oder Copolymer) zugesetzt oder ein Prepolymer (z.B. Monomer oder Oligomer) bzw. eine Kombination von Prepolymeren, die durch Polymerisation oder Copolymerisation ein Polymer oder Copolymer bilden, oder ein anorganisches Bindemittel. Als Beispiel seien Polyurethane, Epoxide, Amine, Amide, Kieselsäureester, Silikonharze, Alkydharze, Polyester, Acrylate, Silicate, modifizierten Naturkautschuke, Kunststoffdispersionen, Phenole, Melamine, Polyvinylacetalen, und Polyvinylchloride genannt. Das Bindemittel kann auch ein Zweikomponenten-Bindemittelsystem umfassend ein Harz und einen Vernetzter (Härter) sein. Für den Korrosionsschutz von Aluminium wird bevorzugt Epoxidharz als Bindemittel eingesetzt. Besonders bevorzugt ist ein Bindemittelsystem umfassend ein Bisphenol A-Epoxidharz und ein Polyaminoamid-Härter. Diese reagieren beim Aushärten miteinander und bilden so ein Netzwerk aus, in welchem die Partikel des Korrosionsschutzpigments eingebettet sind. Diese erfindungsgemäß bevorzugte Variante wird üblicherweise als 2K (Zweikomponenten-)EP -Lack bezeichnet.

Als anorganische Bindemittel werden insbesondere mineralische Bindemittel eingesetzt, insbesondere solche ausgewählt aus der Gruppe der Silikate. Bei Verwendung mineralischer Bindemittel erfolgt nach der Applikation der Beschichtung üblicherweise eine Behandlung bei hohen Temperaturen, so dass das mineralische Bindemittel verfestigt wird. Derartige mineralische Bindemittel werden insbesondere für Beschichtungen verwendet, in denen plättchen- bzw. lamellenförmige Korrosionsschutzpigmente eingesetzt werden (Lamellenbeschichtungen).

Der massebezogene Anteil des festen Bindemittels oder Bindemittelsystems an der erfindungsgemäß zu verwendenden Korrosionsschutzbeschichtung beträgt 5 bis 20%, vorzugsweise 8 bis 9 %. Der massebezogene Anteil des Bindemittels oder Bindemittelsystems an der erfindungsgemäß zu verwendenden Mischung zur Herstellung der Korrosionsschutzbeschichtung beträgt 5 bis 50%, vorzugsweise 5 bis 20 %, besonders bevorzugt 7 bis 8 %.

Die erfindungsgemäß zu verwendende Mischung zur Herstellung einer Korrosionsschutzbeschichtung kann ein oder mehrere Lösungsmittel enthalten. Die erfindungsgemäß zu verwendende Mischung kann auch Lösungsmittelanteile enthalten, die mit dem Bindemittel eingebracht werden, sofern dieses in einem Lösungsmittel gelöst ist. Die folgenden Angaben beziehen sich auf alle in der Mischung vorhandenen Lösungsmittel, unabhängig davon, ob sie mit dem Bindemittel oder unabhängig von dem Bindemittel in die Mischung eingebracht werden. Die Lösungsmittel für die erfindungsgemäß zu verwendende Mischung zur Herstellung einer Korrosionsschutzbeschichtung müssen sorgsam ausgewählt werden, da sie nicht nur rein verarbeitungstechnische Eigenschaften, wie Verlauf, An- und Durchtrocknung beeinflussen, sondern auch die Chemikalienbeständigkeit der Beschichtung und die Topfzeit der Mischung. Ketone und Ester können mit aminofunktionellen Härtern Addukte bilden und so die Topfzeit verlängern, während andererseits die Topfzeit durch Alkohole verkürzt wird.

Es kann eine Kombination aus echten und latenten Lösungsmitteln eingesetzt werden. Während ein echtes Lösungsmittel allein in der Lage ist, den gewünschten Stoff, d.h. im vorliegenden Fall das Bindemittel bzw. Bindemittelsystem zu lösen, ist ein latentes Lösungsmittel nur in einer Mischung mit mindestens einem echten Lösungsmittel in der Lage, den gewünschten Stoff zu lösen. Vorzugsweise umfassen die in der erfindungsgemäß zu verwendenden Mischung enthaltenen Lösungsmittel echte Lösungsmittel, z.B. Methoxypropylacetat und/oder Methylethylketon und/oder Ethylacetat und latente Lösungsmittel z.B. Butylacetat und/oder Methylisobutylketon und/oder Xylol und/oder Aceton.

Eine insbesondere für das o.g. erfindungsgemäß bevorzugte Bindemittelsystem umfassend ein Bisphenol A-Epoxidharz und einen Polyaminoamid-Härter bevorzugt eingesetzte Kombination von Lösungsmitteln umfasst Methoxypropylacetat und Methylethylketon als echte Lösungsmittel sowie Butylacetat als latentes Lösungsmittel. Methoxypropylacetat stellt durch seine hohe Verdunstungszahl sicher, dass ein echtes Lösungsmittel den Film als letztes verlässt.

Die erfindungsgemäß zu verwendende Mischung liegt in Form einer Dispersion oder Suspension vor. Durch den Zusatz eines oder mehrerer Lösungsmittel wird die Viskosität der Mischung bevorzugt so eingestellt, dass eine Verarbeitung mit den in der Lackiertechnik angewandten Verfahren, wie z.B. Spritzlackierung, Rollen, Streichen, Tauchverfahren etc. ermöglicht wird. Der massebezogene Anteil des bzw. der Lösungsmittel an der Mischung zur Herstellung der erfindungsgemäß zu verwendenden Korrosionsschutzbeschichtung ergibt sich aus dem Verarbeitungsverfahren und beträgt bei Spritzlackierung 5 bis 15 %, vorzugsweise 10 bis 11 %.

Eine erfindungsgemäß zu verwendende Korrosionsschutzbeschichtung und dementsprechend die erfindungsgemäß zu verwendende Mischung zu ihrer Herstellung kann ggf. weitere partikelförmige Feststoffe enthalten, beispielsweise Füllstoffe und andere Additive.

Solche Additive umfassen beispielsweise Thixotropierungsmittel, Entwässerungsmittel und Füllstoffe. Thixotropierungsmittel sind empfehlenswert, um ein Absetzen der Pigmente zu verhindern. Bevorzugt sind die Thixotropierungsmittel ausgewählt aus der Gruppe bestehend aus pyrogenen Kieselsäuren, Schichtsilikaten, hydrierten Rizinusölen, Cellulosederivaten und Polyacrylaten. Entwässerungsmittel unterbinden die Reaktion des Pigmentes mit Wasser, die zur Auflösung des Pigments unter Entwicklung von Wasserstoff führt. Bevorzugt sind die Entwässerungsmittel ausgewählt aus der Gruppe bestehend aus Zeolithen und Isocyanaten.

Bevorzugt enthält die erfindungsgemäß zu verwendende Korrosionsschutzbeschichtung sowie die Mischung zu ihrer Herstellung ein oder mehrere Thixotropierungsmittel ausgewählt aus der Gruppe der pyrogenen Kieselsäuren, z.B. Aerosil R 972 und/oder ein oder mehrere Entwässerungsmittel ausgewählt aus der Gruppe der als Molekularsiebe wirksamen Zeolithen, z.B. Sylosiv A 300.

In der erfindungsgemäß zu verwendenden Korrosionsschutzbeschichtung ist die Pigmentvolumenkonzentration so eingestellt, dass sie 90 bis 110 % der zum Erreichen der Perkolationsschwelle nötigen Pigmentvolumenkonzentration beträgt.

Wird ein Korrosionsschutzpigment eingesetzt, dessen Partikel sphärisch sind (nicht erfindungsgemäß), dann beträgt die Pigmentvolumenkonzentration in der Korrosionsschutzbeschichtung vorzugsweise 90 bis 110 % der kritischen Pigmentvolumenkonzentration.

Gemäß ISO 4681/1 ist die Pigmentvolumenkonzentration (PKV) eines Erzeugnisses das Verhältnis des Volumens der enthaltenen Pigmente und anderer partikelförmigen Feststoffe (im folgenden Füllstoffe genannt) zum Gesamtvolumen an nichtflüchtigen Bestandteilen (Pigmente, Füllstoffen und Bindemittel):

$$PVK[\%] = \frac{\sum V_{Pigmente} + \sum V_{Füllstoffe}}{\sum V_{Pigmente} + \sum V_{Füllstoffe} + \sum V_{Bindemittel}} \cdot 100$$

Unter "Perkolationsschwelle wird diejenige Pigmentvolumenkonzentration verstanden, bei der die Anzahl der Pigmentpartikel gerade groß genug ist, um unter Standardbedingungen (25 °C, 101,325 kPa) elektronisch leitfähige Kontakte zwischen den Partikeln herzustellen und so durchgehende elektronische Leitungspfade bilden. Wenn in einer Beschichtung die Perkolationsschwelle erreicht ist, ändern sich bestimmte Eigenschaften wie die elektronische Leitfähigkeit also schlagartig. Aufgrund dieses schlagartigen Anstiegs der Leitfähigkeit kann ermittelt werden, bei welcher Pigmentvolumenkonzentration die Perkolationsschwelle erreicht wird, Dieser Wert ist abhängig von der Partikelgröße, Partikelgrößenverteilung, Partikelform und der chemischen Natur der eingesetzten Pigmente und sonstigen Feststoffteilchen.

Bei annähernd kugelförmigen Pigmentpartikeln (nicht erfindungsgemäß) entspricht die Perkolationsschwelle der kritischen Pigmentvolumenkonzentration. Die kritische Pigmentvolumenkonzentration (KPKV) ist gemäß ISO-4681/1 der Wert der Pigmentvolumenkonzentration, bei dem sich die Feststoffteilchen gegenseitig berühren, und die Zwischenräume zwischen den sich berührenden Feststoffteilchen gerade mit Bindemittel gefüllt sind.

Die kritische Pigmentvolumenkonzentration kann durch Bestimmung der Ölzahl des eingesetzten Pigments bzw. der eingesetzten Mischung aus Pigmenten und Füllstoffen ermittelt werden (DIN ISO 787 Teil 5). Nach DIN ISO 787, Teil 5 versteht man unter der Ölzahl diejenige Menge an tropfenweise zugegebenem Lackleinöl, die eine bestimmte Menge Pigment oder Füllstoff beim Kneten mit einem Spatel bis zum Erreichen einer zusammenhängenden, kittartigsteifen Paste absorbiert ("Netzpunkt"). Im Allgemeinen wird die Ölzahl in g(Leinöl) pro 100 g Pigment bzw. Füllstoff angegeben. Sie wird bestimmt, indem man eine zu einer bestimmten Menge Pigment, je nach zu erwartender Ölzahl (bei hoher zu erwartender Ölzahl weniger Pigment), tropfenweise Lackleinöl zugibt und gut einarbeitet. Der Endpunkt ist erreicht, wenn nach eine zusammenhängende Paste, die noch nicht schmiert, entstanden ist. Um von der Ölzahl auf die kritische Pigmentvolumenkonzentration zu schließen, gilt folgende Formel:

$$KPVK = \frac{100}{\left(1 + \frac{\rho_{pigment} \cdot \ddot{O}Z}{\rho_{leinöl} \cdot 100}\right)}$$

Ein entscheidendes Kriterium zur Charakterisierung von Beschichtungen ist das Verhältnis der jeweiligen Pigmentvolumenkonzentration zur kritischen Pigmentvolumenkonzentration (Q-Wert):

$$Q = ([PKV]/[KPKV])* \ 100 \ \%$$

Der Q-Wert gibt an, wie nahe die tatsächliche Pigmentvolumenkonzentration der kritischen Pigmentvolumenkonzentration kommt.

Während bei kugelförmigen Pigmenten (nicht erfindungsgemäß) bei der kritischen Pigmentvolumenkonzentration gleichzeitig auch die Perkolationsschwelle erreicht wird, kann bei Partikeln, die in einer Richtung eine im Vergleich zu anderen Richtungen signifikant größere Ausdehnung haben, z.B. lamellenförmigen Partikeln, die Perkolationsschwelle weit unter der kritischen Pigmentvolumenkonzentration liegen.

Für die Funktion der erfindungsgemäß zu verwendenden Korrosionsschutzbeschichtung ist es erforderlich, dass da die Partikel des Korrosionsschutzpigments einander berühren und so durchgehende elektronische Leitungspfade bilden. Dies ist gegeben, wenn Perkolationsschwelle annähernd erreicht ist. Um dies zu erreichen, wird die Pigmentvolumenkonzentration PKV der erfindungsgemäß zu verwendenden Korrosionsschutzbeschichtung bevorzugt auf 30 bis 82,5 Vol.-% eingestellt.

Insbesondere bei Korrosionsschutzpigmenten mit annähernd kugelförmigen Partikeln (nicht erfindungsgemäß) wird die Pigmentvolumenkonzentration PKV der Korrosionsschutzbeschichtung bevorzugt so gewählt, dass sie im Bereich von 90 bis 110 % der kritischen Pigmentvolumenkonzentration beträgt. Dies ist typischerweise bei Pigmentvolumenkonzentrationen von 67,5 bis 82,5 Vol.-% der Fall.

Dabei ist zu beachten, dass in die Berechnung der Pigmentvolumenkonzentration PKV auch das Volumen solcher partikelförmiger Feststoffe eingeht, die keine Pigmente sind (in diesem Zusammenhang als Füllstoffe bezeichnet). Diese partikelförmigen Feststoffe sind üblicherweise nicht elektronisch leitfähig. Bei einem zu hohen Anteil an elektronisch nicht leitfähigen Feststoffpartikeln könnten diese den Kontakt zwischen den elektronisch leitfähigen Partikeln des Korrosionsschutzpigments blockieren, so dass die Beschichtung trotz Erreichen der oben definierten kritischen Pigmentvolumenkonzentration nicht elektronisch leitfähig wird. Um dies zu verhindern, beträgt in der erfindungsgemäß zu verwendenden Korrosionsschutzbeschichtung der volumenbezogene Anteil der Partikel des Korrosionsschutzpigments an der Gesamtheit der in der Korrosionsschutzbeschichtung vorhandenen Feststoffpartikel 70 % oder mehr, bevorzugt 80 % oder mehr, weiter bevorzugt 90 % oder mehr, und besonders bevorzugt 95 % oder mehr.

Entsprechendes gilt für die erfindungsgemäß zu verwendende Mischung zur Herstellung der Korrosionsschutzbeschichtung. Da für die Berechnung der Pigmentvolumenkonzentration nur die nichtflüchtigen Bestandteile eines Erzeugnisses zu berücksichtigen sind, bleiben ggf. der Mischung zugesetzte Lösungsmittel außer Betracht, und die Pigmentvolumenkonzentration berechnet sich für die erfindungsgemäß zu verwendende Mischung ebenso wie für die erfindungsgemäß zu verwendende Korrosionsschutzbeschichtung.

Zur Herstellung der erfindungsgemäß zu verwendenden Mischung werden die Pigmentpartikel mit dem Bindemittel bzw. Bindemittelsystem sowie ggf. weiteren Mischungsbestandteilen wie Additiven in Form partikelförmiger Feststoffe und/oder Lösungsmitteln mittels dem Fachmann bekannter Verfahren miteinander vermischt (z.B. durch Dispergieren mittels eines Dissolvers oder ähnlicher Rühraggregate), so dass eine homogene Dispersion entsteht.

Die vorliegende Erfindung betrifft weiterhin ein Verfahren zur Herstellung einer Korrosionsschutzbeschichtung auf einer Metalloberfläche, insbesondere auf einer Oberfläche eines Metalls ausgewählt aus der Gruppe bestehend aus Aluminium und Aluminiumlegierungen, umfassend die Schritte

- Aufbringen einer erfindungsgemäß zu verwendenden Mischung zur Herstellung einer Korrosionsschutzbeschichtung auf zumindest einen Teil der Metalloberfläche,
- ggf. Aushärtenlassen des Bindemittels.

Soweit erforderlich, werden die zu beschichtenden Metalloberflächen vor dem Aufbringen der erfindungsgemäß zu verwendenden Korrosionsschutzbeschichtung mit einem geeigneten Lösungsmittel, z.B. Butylacetat, entfettet. Anschließend können die zu beschichtenden Oberflächen gebeizt werden, dies ist insbesondere für Luftfahrtanwendungen üblich. Typischerweise umfasst das Beizen einen ersten Beizschritt, in welchem die zu beschichtende Oberfläche mit Lauge, z.B. 4 mol/l Natronlauge behandelt wird, und einen zweiten Beizschritt, in welchem die die zu beschichtende Oberfläche mit Säure, z.B. mit ca. 20 Gew.-% Salpetersäurelösung behandelt wird. Nach jedem Beizschritt erfolgt eine Spülung mit Wasser. Nach dem Abspülen des zuletzt angewendeten Beizmittels kann eine Trocknung bei erhöhter Temperatur, beispielsweise 65 °C, erfolgen.

Das Aufbringen der Mischung, die in Form einer Dispersion oder Suspension vorliegt, auf die zu beschichtende Oberfläche erfolgt vorzugsweise mittels in der Lackiertechnik angewandter Verfahren, wie z.B. Spritzlackierung, Rollen, Streichen, oder mit anderen Standardverfahren wie Walzen oder Tauchen etc. Die Trockenschichtdicke der Korrosi-

onsschutzbeschichtung beträgt 100 μm oder weniger, bevorzugt 80 μm oder weniger, besonders bevorzugt 10 bis 20 μm. Sofern erforderlich, kann anschließend eine Härtung des Bindemittels mittels üblicher Verfahren erfolgen.

Die Erfindung betrifft ferner einen Gegenstand umfassend

- einen Grundkörper aus Metall ausgewählt aus Aluminium und Aluminiumlegierungen oder umfassend Bereiche aus Metall, ausgewählt aus der Gruppe bestehend aus Aluminium und, Aluminiumlegierungen, und
- eine auf dem aus Metall ausgewählt aus Aluminium und Aluminiumlegierungen bestehenden Grundkörper bzw. den metallischen Bereichen des Grundkörpers angeordnete oben beschriebene Korrosionsschutzbeschichtung.

Unter Grundkörper wird der Gegenstand abzüglich der erfindungsgemäß zu verwendenden Korrosionsschutzbeschichtung verstanden. Dieser Grundkörper besteht aus einem Metall ausgewählt aus der Gruppe bestehend aus Aluminium und Aluminiumlegierungen, oder er enthält Bereiche, die aus Metall ausgewählt aus der Gruppe bestehend aus Aluminium und Aluminiumlegierungen bestehen. Auf dem aus Metall ausgewählt aus der Gruppe bestehend aus Aluminium und Aluminiumlegierungen bestehenden Grundkörper bzw. auf den aus Metall ausgewählt aus der Gruppe bestehend aus Aluminium und Aluminiumlegierungen bestehenden Bereichen des Grundkörpers ist die erfindungsgemäß zu verwendende Korrosionsschutzbeschichtung angeordnet, so dass sie den aus Metall ausgewählt aus der Gruppe bestehend aus Aluminium und Aluminiumlegierungen bestehenden Grundkörper bzw. die metallischen (ausgewählt aus der Gruppe bestehend aus Aluminium und Aluminiumlegierungen) Bereiche des Grundkörpers zumindest teilweise bedeckt. Die Trockenschichtdicke der Korrosionsschutzbeschichtung beträgt 100 μm oder weniger, bevorzugt 80 μm oder weniger, besonders bevorzugt 10 bis 20 μm. Über der Korrosionsschutzbeschichtung können eine oder mehrere Deckschichten angeordnet sein, insbesondere Schicht(en), die eine mechanische Beschädigung des Substrats und der Korrosionsschutzbeschichtung verhindern können. Um einen effektiven kathodischen Korrosionsschutz zu gewährleisten, ist die erfindungsgemäß zu verwendende Korrosionsschutzbeschichtung bevorzugt so auszuwählen, dass das Potential der erfindungsgemäß zu verwendenden Korrosionsschutzbeschichtung mindestens 50 mV unterhalb des Potentials des metallischen Grundkörpers liegt, besonders bevorzugt mindestens 300 mV unterhalb des Potentials des Grundkörpers. Dabei ist zu beachten, dass sowohl das Ruhepotential des Substrats als auch das Ruhepotential der Korrosionsschutzbeschichtung, und demzufolge auch die Potentialdifferenz zwischen beiden, vom umgebenden Elektrolyt abhängen.

Ausführunasbeispiele

Die Korrosionsbeständigkeit wird mittels Auslagerung im Salzsprühnebeltest nach DIN EN ISO 9227 untersucht. Dabei kann die Korrosionsbeständigkeit durch visuelle Beurteilung von Blasenbildung, Haftungsverlust, Korrosionslöchern und Ähnlichem bestimmt werden.

Ausführungsbeispiel 1: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus der Legierung AA 2024

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 301/75X | Bindemittel | 10,0 |
| 2 | Methoxypropylacetat | Lösungsmittel | 4,0 |
| 3 | Methylethylketon | Lösungsmittel | 2,0 |
| 4 | Pyrogene Kieselsäure Aerosil R 972 | Thixotropierungsmittel | 1,0 |
| 5 | Zeolith Sylosiv A300 | Entwässerungsmittel | 0,5 |
| 6 | Butylacetat | Lösungsmittel | 3,0 |
| 7 | Pigment aus MgZn-Legierung (74 Gew.-%Zn/26% Gew.-%Mg) | Korrosionsschutzpigment | 92,4 |
| 8 | Polyamidoamin Ancamide 2353 | Härter | 1,8 |
| 9 | Butylacetat | Lösungsmittel | 10 |

Es wurde eine PVK von 75 % eingestellt. Die experimentell über die Ölzahl ermittelte KPVK beträgt 75 %.

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert, so dass ein Grindometerwert < 10 μm resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 μm.

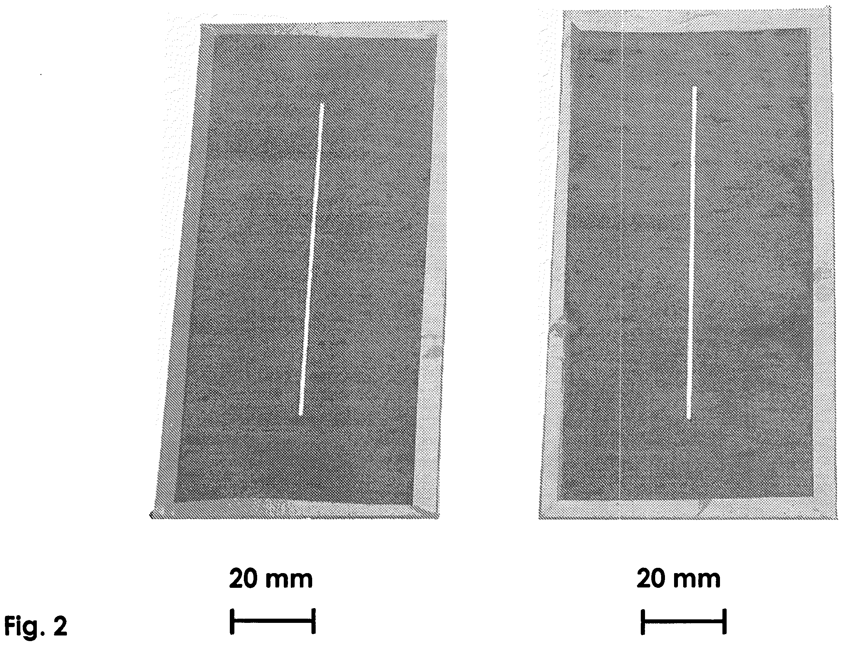

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden bis hin zu 10000 Stunden. Figur 2 zeigt eine Probe nach 3000 Stunden Salzsprühnebeltest (links) und 10000 Stunden (rechts). Nach 10000 Stunden Auslagerung im Salzsprühnebeltest treten weder Blasen noch Korrosion auf der Fläche noch im Ritz auf.

Ausführungsbeispiel 2: Herstellung und Charakterisierung einer Korrosionsschutzgrundierung mit Zink-Magnesium-Legierungspigmenten der Zusammensetzung 80% Zn und 20% Mg auf einem Substrat aus der Legierung AA 2024

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 301/75X | Bindemittel | 10,0 |
| 2 | Methoxypropylacetat | Lösungsmittel | 4,0 |
| 3 | Methylethylketon | Lösungsmittel | 2,0 |
| 4 | Pyrogene Kieselsäure Aerosil R 972 | Thixotropierungsmittel | 1,0 |
| 5 | Zeolith Sylosiv A300 | Entwässerungsmittel | 0,5 |
| 6 | Butylacetat | Lösungsmittel | 3,0 |
| 7 | Pigment aus MgZn-Legierung (80 Gew.-%Zn/ 20% Gew.-%Mg) | Korrosionsschutzpigment | 100,3 |
| 8 | Polyamidoamin Ancamide 2353 | Härter | 1,8 |
| 3 | Butylacetat | Lösungsmittel | 12 |

Es wurde eine PVK von 74 % eingestellt. Die experimentell über die Ölzahl ermittelte KPVK beträgt 74 %

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert, so dass ein Grindometerwert < 10 μm resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 μm.

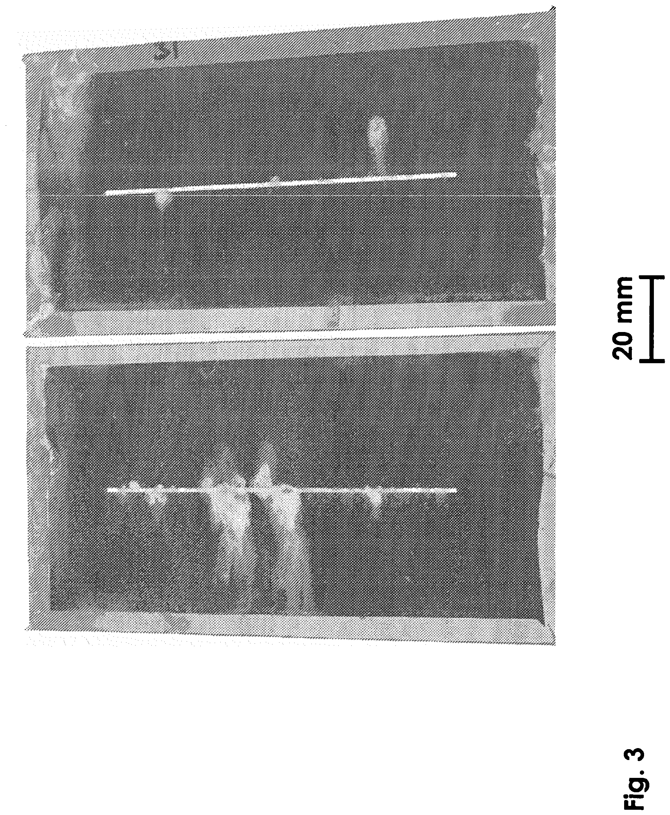

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden. Figur 3 zeigt Proben nach 3000 Stunden Salzsprühnebeltest. Bereits nach 800 Stunden Salzsprühnebeltest zeigten sich erste Korrosionsprodukte auf der Oberfläche.

Ausführungsbeispiel 3: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus der Legierung AA 5754

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 301/75X | Bindemittel | 10,0 |
| 2 | Methoxypropylacetat | Lösungsmittel | 14,0 |
| 3 | Methylethylketon | Lösungsmittel | 2,0 |

(fortgesetzt)

| Position | Produkt | Funktion | Masse / g |
|----------|---------|----------|-----------|
| 4 | Pyrogene Kieselsäure Aerosil R 972 | Thixotropierungsmittel | 1,0 |
| 5 | Zeolith Sylosiv A300 | Entwässerungsmittel | 0,5 |
| 6 | Butylacetat | Lösungsmittel | 3,0 |
| 7 | Pigment aus MgZn-Legierung (74 Gew.-%Zn/ 26% Gew.-%Mg) | Korrosionsschutzpigment | 92,4 |
| 8 | Polyamidoamin Ancamide 2353 | Härter | 1,8 |
| 9 | Butylacetat | Lösungsmittel | 10 |

Es wurde eine PVK von 75 %. Die experimentell über die Ölzahl ermittelte KPVK beträgt 75%.

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert so dass ein Grindometerwert < 10 $\mu$m resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 $\mu$m.

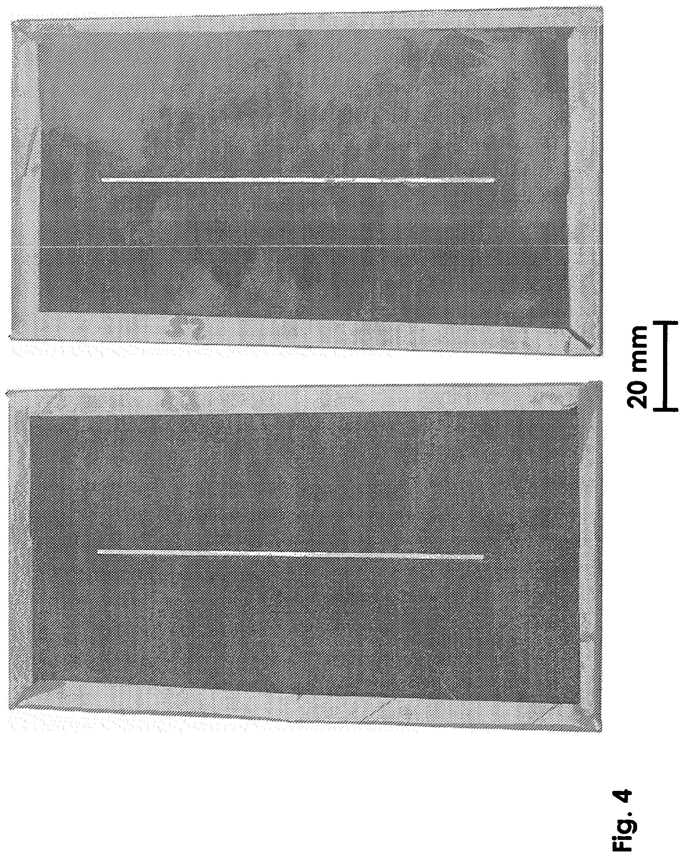

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden bis hin zu 10000 Stunden. Figur 4 zeigt die Proben nach 10000 Stunden Salzsprühnebeltest. Nach 10000 Stunden Auslagerung im Salzsprühnebeltest treten weder Blasen noch Korrosion auf der Fläche noch im Ritz auf.

Vergleichsbeispiel 1: Herstellung und Charakterisierung einer Korrosionsschutzgrundierung mit Zinkpigmenten auf einem Substrat aus der Legierung AA 2024

Die Zusammensetzung der Mischung zur Herstellung der Korrosionsschutzbeschichtung ist wie folgt:

| Position | Produkt | Funktion | Masse / g |
|----------|---------|----------|-----------|
| 1 | Epoxidharz Beckopox EF 301/75X | Bindemittel | 10,0 |
| 2 | Methoxypropylacetat | Lösungsmittel | 4,0 |
| 3 | Methylethylketon | Lösungsmittel | 2,0 |
| 4 | Aerosil R 972 | Thixotropierungsmittel | 1,0 |
| 5 | Sylosiv A300 | Entwässerungsmittel | 0,5 |
| 6 | Butylacetat | Lösungsmittel | 3,0 |
| 7 | Zink | Korrosionsschutzpigment | 111,2 |
| 8 | Polyamidoamin Ancamide 2353 | Härter | 1,8 |
| 9 | Butylacetat | Lösungsmittel | 15 |

Es wurde eine PVK von 66 eingestellt. Die experimentell über die Ölzahl ermittelte KPVK beträgt 66 %.

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert, so dass ein Grindometerwert < 10 $\mu$m resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 $\mu$m.

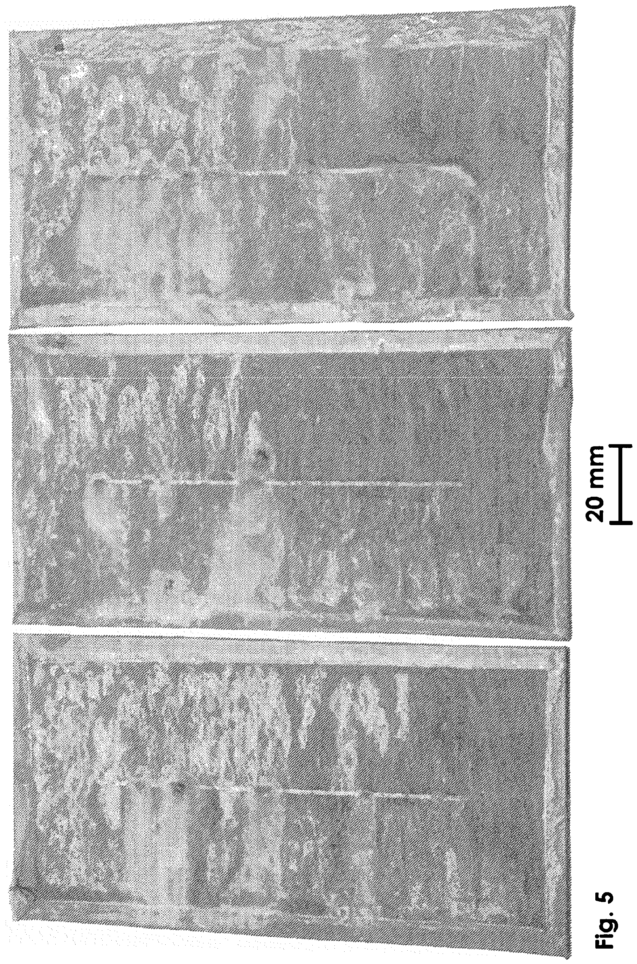

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden. Figur 5 zeigt die Proben nach 3000 Stunden Salzsprühnebeltest. Bereits nach 400 Stunden Salzsprühnebeltest zeigen sich erste Korrosionsprodukte auf der Fläche, und im Ritz treten Korrosionslöcher auf.

Ausführungsbeispiel 4: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus nicht legiertem Stahl 1.0347 (nicht erfindungsgemäß)

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Pigment aus MgZn-Legierung (74 Gew.-%Zn/ 26% Gew.-%Mg) | Korrosionsschulzpigment | 85,8 |
| 5 | Polypox R3 | Reaktiwerdünner | 3,0 |
| 6 | Polyamidoamin Beckopox EH 633 | Härter | 3,0 |

Es wurde eine PVK von 69 % eingestellt. Die experimentell über die Ölzahl ermittelte KPVK beträgt für diese Pigmentzusammensetzung und Partikelgrößenverteilung 69 %.

Die Herstellung erfolgte mit Hilfe des Speedmixers™ DAC 800 FVZ der Firma Hauschild Engineering. Die Positionen 1 bis 4 wurden 6 Minuten lang bei 1800 U/min dispergiert, so dass ein Grindometerwert < 10 μm resultierte. Vor der Applikation wurden die Positionen 5 und 6 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 μm.

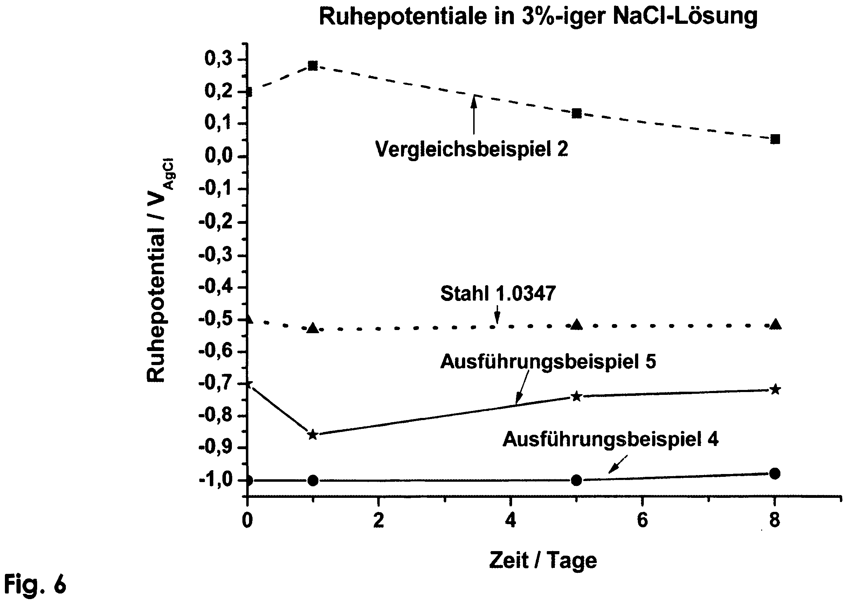

Figur 6 zeigt die Ruhepotentiale der Probe aus Ausführungsbeispiel 4 in wässriger Natriumchlorid-Lösung (3 Gew.-% NaCl) im Vergleich zu denen des unbeschichteten zwischen der Beschichtung gemäß Ausführungsbeispiel 4 und dem Substrat aus nicht legiertem Stahl 1.0347 beträgt ca. 500 mV. Dadurch wird ein kathodischer Schutz gewährleistet.

Ausführungsbeispiel 5: Herstellung und Charakterisierung einer Korrosionsschutzgrundierung mit Zink-Magnesium-Legierungspigmenten der Zusammensetzung 84 Gew.-% Zn und 16 Gew.-% Mg auf einem Substrat aus nicht legiertem Stahl 1.0347 (nicht erfindungsgemäß)

Die Zusammensetzung der Mischung zur Herstellung der Korrosionsschutzbeschichtung ist wie folgt:

| Position | Produkt | Funktion | Masse / g | |
|---|---|---|---|---|
| 1 | Epoxid-Harz Beckopox EP 140 | Bindemittel | 7,4 | |
| 2 | Methoxypropylacetat | Lösungsmittel | 2,0 | |
| 3 | Pyrogene Kieselsäure Aerosil R 972 | Thixotropierungsmittel | 0,5 | |
| 4 | Pigment aus MgZn-Legierung (84 Gew.-%Zn/ 16% Gew.-%Mg) | Korrosionsschutzpigment | 84,0 | |
| 5 | Polypox R3 | Reaktiwerdünner | 3,0 | |
| 6 | Polyamidoamin Beckopox EH 633 | Härter | 3,0 | |

Es wurde eine PVK von 66 % eingestellt. Die experimentell über die Ölzahl ermittelte KPVK beträgt für diese Pigmentzusammensetzung und Partikelgrößenverteilung 66 %.

Die Herstellung erfolgte mit Hilfe des Speedmixers™ DAC 800 FVZ der Firma Hauschild Engineering. Die Positionen 1 bis 4 wurden 6 Minuten lang bei 1800 U/min dispergiert, so dass ein Grindometerwert < 10 μm resultierte. Vor der Applikation wurden die Positionen 5 und 6 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 μm.

Figur 6 zeigt die Ruhepotentiale der Probe aus Ausführungsbeispiel 5 in wässriger Natriumchlorid-Lösung (3 Gew.-% NaCl) im Vergleich zu denen des unbeschichteten Substrates aus nicht legiertem Stahl 1.0347 als Funktion der Zeit. Die Potentialdifferenz zwischen der Beschichtung gemäß Ausführungsbeispiel 5 und dem Substrat aus nicht legiertem Stahl 1.0347 gewährleistet eine kathodische Schutzwirkung. Daher kann durch eine Beschichtung gemäß Ausführungsbeispiel 5 ein guter Korrosionsschutz erreicht werden.

Vergleichsbeispiel 2: Herstellung und Charakterisierung einer Korrosionsschutzgrundierung ohne Korrosionsschutzpigmente auf einem Substrat aus nicht legiertem Stahl 1.0347

Die Zusammensetzung der Mischung zur Herstellung der Korrosionsschutzbeschichtung ist wie folgt:

| Position | Produkt | Funktion | Masse / g |
| --- | --- | --- | --- |
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Polypox R3 | Reaktiwerdünner | 3,0 |
| 5 | Polyamidoamin Beckopox EH 633 | Härter | 3,0 |

Die Herstellung erfolgte mit Hilfe des Speedmixers™ DAC 800 FVZ der Firma Hauschild Engineering. Die Positionen 1 bis 3 wurden 6 Minuten lang bei 1800 U/min dispergiert, so dass ein Grindometerwert < 10 μm resultierte. Vor der Applikation wurden die Positionen 4 und 5 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 μm.

Figur 6 zeigt die Ruhepotentiale der Probe aus Vergleichsbeispiel 2 in wässriger Natriumchlorid-Lösung (3 Gew.-% NaCl) im Vergleich zu denen des unbeschichteten Substrates aus nicht legiertem Stahl 1.0347 als Funktion der Zeit. Die mit einer Beschichtung, die keine Korrosionsschutzpigmente enthält, versehene Probe des Vergleichsbeispiels 2 zeigt ein deutlich höheres Ruhepotential als das Substrat aus nicht legiertem Stahl 1.0347. Es kann keine kathodische Schutzwirkung erreicht werden.

Ausführungsbeispiel 6: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus verzinktem Stahl 1.0347 (nicht erfindungsgemäß)

Die Zusammensetzung der Mischung zur Herstellung der Korrosionsschutzbeschichtung ist wie folgt:

| postition | Produkt | Funktion | Masse / g |
| --- | --- | --- | --- |
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Pigment aus MgZn-Legierung (74 Gew.-%Zn/ 26% Gew.-%Mg) | Korrosionsschutzpigment | 85,8 |
| 5 | Polypox R3 | Reaktiwerdünner | 3,0 |
| 6 | Polyamidoamin Beckopox EH 633 | Härter | 3,0 |

Es wurde eine PVK von 69 % eingestellt. Die experimentell über die Ölzahl ermittelte KPVK beträgt für diese Pigmentzusammensetzung und Partikelgrößenverteilung 69 %.

Die Herstellung erfolgte mit Hilfe des Speedmixers™ DAC 800 FVZ der Firma Hauschild Engineering. Die Positionen 1 bis 4 wurden 6 Minuten lang bei 1800 U/min dispergiert, so dass ein Grindometerwert < 10 μm resultierte. Vor der Applikation wurden die Positionen 5 und 6 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 μm.

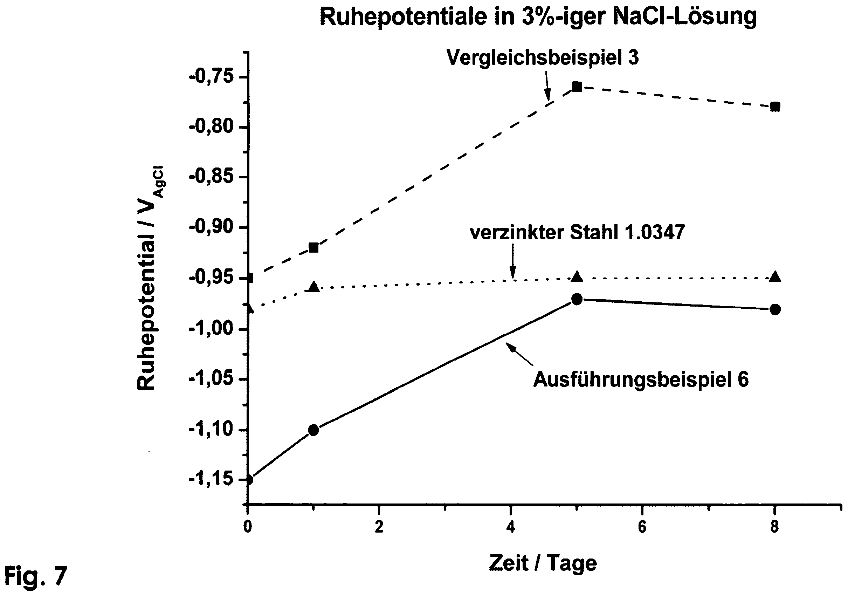

Figur 7 zeigt die Ruhepotentiale der Probe aus Ausführungsbeispiel 6 in wässriger Natriumchlorid-Lösung (3 Gew.-% NaCl) im Vergleich zu denen des Substrats aus verzinktem Stahl 1.0347 als Funktion der Zeit. Die Potentialdifferenz zwischen der Beschichtung gemäß Ausführungsbeispiel 6 und dem Substrat aus verzinktem Stahl 1.0347 gewährleistet eine kathodische Schutzwirkung. Daher kann durch eine Beschichtung gemäß Ausführungsbeispiel 6 ein guter Korrosionsschutz erreicht werden.

Vergleichsbeispiel 3: Herstellung und Charakterisierung einer Korrosionsschutzgrundierung ohne Korrosionsschutzpigmente auf einem Substrat aus verzinktem Stahl 1.0347

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Polypox R3 | Reaktiwerdünner | 3,0 |
| 5 | Polyamidamin Beckopox EH 633 | Härter | 3,0 |

Die Herstellung erfolgte mit Hilfe des Speedmixers™ DAC 800 FVZ der Firma Hauschild Engineering. Die Positionen 1 bis 3 wurden 6 Minuten lang bei 1800 U/min dispergiert, so dass ein Grindometerwert < 10 $\mu$m resultierte. Vor der Applikation wurden die Positionen 4 und 5 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 $\mu$m.

Figur 7 zeigt die Ruhepotentiale der Probe aus Vergleichsbeispiel 3 in wässriger Natriumchlorid-Lösung (3 Gew.-% NaCl) im Vergleich zu denen des unbeschichteten Substrates aus verzinktem Stahl 1.0347 als Funktion der Zeit. Die mit einer Beschichtung, die keine Korrosionsschutzpigmente enthält, versehene Probe des Vergleichsbeispiels 3 zeigt ein deutlich höheres Ruhepotential als das Substrat aus verzinktem Stahl 1.0347. Es kann keine kathodische Schutzwirkung erreicht werden.

**Patentansprüche**

1.   Gegenstand umfassend

- einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen
und
- eine auf dem aus Metall bestehenden Grundkörper bzw. den metallischen Bereichen des Grundkörpers angeordnete Korrosionsschutzbeschichtung für Metalle ausgewählt aus der Gruppe bestehend aus Aluminium und Aluminiumlegierungen, umfassend

- ein ggf. ausgehärtetes Bindemittel oder Bindemittelsystem
- in dem ggf. ausgehärteten Bindemittel oder Bindemittelsystem verteilte Partikel eines Korrosionsschutzpigments aus einer Legierung aus Zink und Magnesium mit einem Zinkgehalt von 74 bis 90 Gew.-%, bevorzugt 74 bis 80 Gew.-%, und insbesondere 74 Gew.-%
- vorzugsweise keine Chromverbindungen
- ggf. weitere partikelförmige Feststoffe,

wobei der volumenbezogene Anteil der Partikel des besagten Korrosionsschutzpigments an der Gesamtheit der in der Korrosionsschutzbeschichtung vorhandenen Feststoffpartikel 70 % oder mehr, bevorzugt 80 % oder mehr, weiter bevorzugt 90 % oder mehr und besonders bevorzugt 95 % oder mehr beträgt
wobei die Pigmentvolumenkonzentration in der Korrosionsschutzbeschichtung 90 bis 110 % der zum Erreichen der Perkolationsschwelle nötigen Pigmentvolumenkonzentration beträgt,
wobei die Partikel des besagten Korrosionsschutzpigments lamellenförmige Partikel sind,
wobei die Korrosionsschutzbeschichtung den aus Metall bestehenden Grundkörper bzw. die metallischen Bereiche des Grundkörpers zumindest teilweise bedeckt.

**2.** Gegenstandnach Anspruch 1, **dadurch gekennzeichnet, dass**
die Pigmentvolumenkonzentration in der Korrosionsschutzbeschichtung zwischen 30 und 82,5 Vol.-% liegt.

**3.** Gegenstand nach einem der vorhergehenden Ansprüche,
**dadurch gekennzeichnet, dass**
mindestens 50 % der Partikel des Korrosionsschutzpigments, bevorzugt mindestens 90 % der Partikel des Korrosionsschutzpigments eine größte Abmessung zwischen 1 und 100 $\mu$m, bevorzugt zwischen 10 und 20 $\mu$m, gemessen mittels Laserbeugung, besitzen.

**4.** Gegenstand nach einem der vorhergehenden Ansprüche, **dadurch gekennzeichnet, dass**
das Bindemittel oder Bindemittelsystem ausgewählt ist aus der Gruppe bestehend aus Polyurethanen, Epoxiden, Aminen, Amiden, Kieselsäureestern, Silikonharzen, Alkydharzen, Polyestem, Acrylaten, Silicaten, modifizierten Naturkautschuken, Kunststoffdispersionen, Phenolen, Melaminen, Polyvinylacetalen, Polyvinylchloriden, wobei Kieselsäureester sowie Bindemittelsysteme umfassend Epoxide und Amidoamine und mineralische Bindemitteln aus der Gruppe der Silicate, bevorzugt sind.

**5.** Gegenstand nach einem der vorhergehenden Ansprüche,
**dadurch gekennzeichnet, dass**
das ausgehärtete Bindemittel das Aushärtungsprodukt eines ZweikomponentenSystems aus einem Bisphenol-A Epoxidharz und einem Polyamidoaminhärter ist.

**6.** Gegenstand nach einem der vorhergehenden Ansprüche, **dadurch gekennzeichnet, dass**
die Korrosionsschutzbeschichtung
ein oder mehrere Thixotropierungsmittel ausgewählt aus der Gruppe bestehend aus pyrogenen Kieselsäuren, Schichtsilikaten, hydrierten Rizinusölen, Cellulosederivaten und Polyacrylaten,
und/oder
ein oder mehrere Entwässerungsmittel ausgewählt aus der Gruppe bestehend aus Zeolithen und Isocyanaten umfasst.

**7.** Verwendung einer Mischung zur Herstellung einer Korrosionsschutzbeschichtung für den Korrosionsschutz von Metallen ausgewählt aus der Gruppe bestehend aus Aluminium und Aluminiumlegierungen, umfassend

- ein Bindemittel oder Bindemittelsystem
- in dem Bindemittel oder Bindemittelsystem verteilte Partikel eines Korrosionsschutzpigments aus einer Legierung aus Zink und Magnesium mit einem Zinkgehalt von 74 bis 90 Gew.-%, bevorzugt 74 bis 80 Gew.-%, und insbesondere 74 Gew.-%.
- vorzugsweise keine Chromverbindungen
- ggf. ein oder mehrere Lösungsmittel
- ggf. weitere partikelförmige Feststoffe,

wobei der volumenbezogene Anteil der Partikel des besagten Korrosionsschutzpigments an der Gesamtheit der in der Mischung vorhandenen Feststoffpartikel 70 % oder mehr, bevorzugt 80 % oder mehr, weiter bevorzugt 90 % oder mehr und besonders bevorzugt 95 % oder mehr beträgt,
wobei die auf die nichtflüchtigen Bestandteile der Mischung bezogene Pigmentvolumenkonzentration 90 bis 110 % der zum Erreichen der Perkolationsschwelle nötigen Pigmentvolumenkonzentration beträgt,
wobei die Partikel des besagten Korrosionsschutzpigments lamellenförmige Partikel sind.

**8.** Verwendung einer Mischung zur Herstellung einer Korrosionsschutzbeschichtung nach Anspruch 7, **dadurch gekennzeichnet, dass**
die auf die nichtflüchtigen Bestandteile der Mischung bezogene Pigmentvolumenkonzentration zwischen 30 und 82,5 Vol.-% liegt.

**9.** Verwendung einer Mischung zur Herstellung einer Korrosionsschutzbeschichtung nach einem der Ansprüche 7 und 8, **dadurch gekennzeichnet, dass**
mindestens 50 % der Partikel des Korrosionsschutzpigments, bevorzugt mindestens 90 % der Partikel des Korrosionsschutzpigments eine größte Abmessung zwischen 1 und 100 $\mu$m, bevorzugt zwischen 10 und 20 $\mu$m, gemessen mittels Laserbeugung, besitzen.

**10.** Verwendung einer Mischung zur Herstellung einer Korrosionsschutzbeschichtung nach einem der Ansprüche 7 bis 9, **dadurch gekennzeichnet, dass**

das Bindemittel oder Bindemittelsystem ausgewählt ist aus der Gruppe bestehend aus Polyurethanen, Epoxiden, Aminen, Amiden, Kieselsäureestern, Silikonharzen, Alkydharzen, Polyestern, Acrylaten, Silicaten, modifizierten Naturkautschuken, Kunststoffdispersionen, Phenolen, Melaminen, Polyvinylacetalen, Polyvinylchloriden, wobei Kieselsäureester sowie Bindemittelsysteme umfassend Epoxide und Amidoamine und mineralische Bindemitteln aus der Gruppe der Silicate bevorzugt sind.

**11.** Verwendung einer Mischung zur Herstellung einer Korrosionsschutzbeschichtung nach einem der Ansprüche 7 bis 10, **dadurch gekennzeichnet, dass**

das Bindemittel ein Zweikomponenten-System aus einem Bisphenol-A Epoxidharz und einem Polyamidoaminhärter ist.

**12.** Verwendung einer Mischung zur Herstellung einer Korrosionsschutzbeschichtung nach einem Ansprüche 7 bis 11, **dadurch gekennzeichnet, dass**

die Mischung

ein oder mehrere Thixotropierungsmittel ausgewählt aus der Gruppe bestehend aus pyrogenen Kieselsäuren, Schichtsilikaten, hydrierten Rizinusölen, Cellulosederivaten und Polyacrylaten.
und/oder
ein oder mehrere Entwässerungsmittel ausgewählt aus der Gruppe bestehend aus Zeolithen und Isocyanaten umfasst.

**13.** Verwendung einer Mischung zur Herstellung einer Korrosionsschutzbeschichtung nach einem der Ansprüche 7 bis 12, **dadurch gekennzeichnet, dass**

die Lösungsmittel echte Lösungsmittel, z.B. Methoxypropylacetat und/oder Methylethylketon und/oder Ethylacetat und latente Lösungsmittel z.B. Butylacetat und/oder Methylisobutylketon und/oder Xylol und/oder Aceton umfassen.

**14.** Verfahren zur Herstellung einer Korrosionsschutzbeschichtung auf einer Oberfläche eines Metalls ausgewählt aus der Gruppe bestehend aus Aluminium und Aluminiumlegierungen, umfassend die Schritte

- Aufbringen einer Mischung wie in den Ansprüchen 7 bis 13 definiert auf zumindest einen Teil der Metalloberfläche,
- ggf. Aushärtenlassen des Bindemittels.

**15.** Verwendung einer Korrosionsschutzbeschichtung umfassend

- ein ggf. ausgehärtetes Bindemittel oder Bindemittelsystem
- in dem ggf. ausgehärteten Bindemittel oder Bindemittelsystem verteilte Partikel eines Korrosionsschutzpigments aus einer Legierung aus Zink und Magnesium mit einem Zinkgehalt von 74 bis 90 Gew.-%, vorzugsweise keine Chromverbindungen
- ggf. weitere partikelförmige Feststoffe,
wobei der volumenbezogene Anteil der Partikel des besagten Korrosionsschutzpigments an der Gesamtheit der in der Korrosionsschutzbeschichtung vorhandenen Feststoffpartikel 70 % oder mehr, bevorzugt 80 % oder mehr, weiter bevorzugt 90 % oder mehr und besonders bevorzugt 95 % oder mehr beträgt
wobei die Pigmentvolumenkonzentration in der Korrosionsschutzbeschichtung 90 bis 110 % der zum Erreichen der Perkolationsschwelle nötigen Pigmentvolumenkonzentration beträgt,
wobei die Partikel des besagten Korrosionsschutzpigments lamellenförmige Partikel sind,

für den Korrosionsschutz von Metallen ausgewählt aus der Gruppe bestehend aus Aluminium und Aluminiumlegierungen.

**Claims**

**1.** Article comprising

- a base body of a metal selected from the group consisting of aluminium and alloys of aluminium, or comprising regions of a metal selected from the group consisting of aluminium and alloys of aluminium, and
- an anti-corrosion coating, disposed on the metal base body or, respectively, on the metallic regions of the base body, for metals selected from the group consisting of aluminium and alloys of aluminium, comprising

    - an optionally cured binder or binder system
    - particles, distributed in the optionally cured binder or binder system, of an anti-corrosion pigment made of an alloy of zinc and magnesium with a zinc content of 74 to 90 wt%, preferably 74 to 80 wt%, and more particularly 74 wt%
    - preferably no chromium compounds,
    - optionally further particulate solids,

wherein the volume-based fraction of the particles of the said anti-corrosion pigment in the entirety of the solids particles present in the anti-corrosion coating being 70% or more, preferably 80% or more, more preferably 90% or more and very preferably 95% or more,
wherein the pigment volume concentration in the anti-corrosion coating amounts to 90% to 110% of the pigment volume concentration needed in order to attain the percolation threshold,
wherein the particles of the said anti-corrosion pigment being lamellar particles,
wherein the anti-corrosion coating at least partly covers the metal base body or the metallic regions of the base body.

2. Article according to Claim 1, **characterized in that** the pigment volume concentration in the anti-corrosion coating is between 30 and 82.5 vol%.

3. Article according to either of the preceding claims,
**characterized in that**
at least 50% of the particles of the anti-corrosion pigment, preferably at least 90% of the particles of the anti-corrosion pigment, possess a largest dimension of between 1 and 100 $\mu$m, preferably between 10 and 20 $\mu$m, measured by means of laser diffraction.

4. Article according to any of the preceding claims,
**characterized in that**
the binder or binder system is selected from the group consisting of polyurethanes, epoxides, amines, amides, silicic esters, silicone resins, alkyd resins, polyesters, acrylates, silicates, modified natural rubbers, polymeric dispersions, phenols, melamines, polyvinyl acetals, polyvinyl chlorides, preference being given to silicic esters and also binder systems comprising epoxides and amidoamines and mineral binders from the group of the silicates.

5. Article according to any of the preceding claims,
**characterized in that**
the cured binder is the curing product of a two-component system composed of a bisphenol A epoxy resin and a polyamidoamine hardener.

6. Article according to any of the preceding claims,
**characterized in that**
the anti-corrosion coating comprises one or more thixotropic agents selected from the group consisting of fumed silicas, phyllosilicates, hydrogenated castor oils, cellulose derivatives and polyacrylates,
and/or
one or more dehydrating agents selected from the group consisting of zeolites and isocyanates.

7. Use of a mixture for producing an anti-corrosion coating for corrosion control of metals selected from the group consisting of aluminium and alloys of aluminium, comprising

    - a binder or binder system,
    - particles, distributed in the binder or binder system, of an anti-corrosion pigment made of an alloy of zinc and magnesium with a zinc content of 74 to 90 wt%, preferably 74 to 80 wt%, and more particularly 74 wt%
    - preferably no chromium compounds,
    - optionally one or more solvents,
    - optionally further particulate solids,

wherein the volume-based fraction of the particles of the said anti-corrosion pigment in the entirety of the solids particles present in the mixture is 70% or more, preferably 80% or more, more preferably 90% or more and very preferably 95% or more,

wherein the pigment volume concentration, based on the nonvolatile constituents of the mixture, being 90% to 110% of the pigment volume concentration needed in order to attain the percolation threshold,

wherein the particles of the said anti-corrosion pigment being lamellar particles.

8. Use of a mixture for producing an anti-corrosion coating according to Claim 7, **characterized in that** the pigment volume concentration, based on the nonvolatile constituents of the mixture, is between 30 and 82.5 vol%.

9. Use of a mixture for producing an anti-corrosion coating according to either of Claims 7 and 8,
**characterized in that**
at least 50% of the particles of the anti-corrosion pigment, preferably at least 90% of the particles of the anti-corrosion pigment, possess a largest dimension of between 1 and 100 $\mu$m, preferably between 10 and 20 $\mu$m, measured by means of laser diffraction.

10. Use of a mixture for producing an anti-corrosion coating according to any of Claims 7 to 9,
**characterized in that**
the binder or binder system is selected from the group consisting of polyurethanes, epoxides, amines, amides, silicic esters, silicone resins, alkyd resins, polyesters, acrylates, silicates, modified natural rubbers, polymeric dispersions, phenols, melamines, polyvinyl acetals, polyvinyl chlorides, preference being given to silicic esters and also binder systems comprising epoxides and amidoamines and mineral binders from the group of the silicates.

11. Use of a mixture for producing an anti-corrosion coating according to any of Claims 7 to 10,
**characterized in that**
the binder is a two-component system composed of a bisphenol A epoxy resin and a polyamidoamine hardener.

12. Use of a mixture for producing an anti-corrosion coating according to any of Claims 7 to 11,
**characterized in that**
the mixture comprises
one or more thixotropic agents selected from the group consisting of fumed silicas, phyllosilicates, hydrogenated castor oils, cellulose derivatives and polyacrylates,
and/or
one or more dehydrating agents selected from the group consisting of zeolites and isocyanates.

13. Use of a mixture for producing an anti-corrosion coating according to any of Claims 7 to 12,
**characterized in that**
the solvents comprise true solvents, e.g. methoxypropyl acetate and/or methyl ethyl ketone and/or ethyl acetate, and latent solvents, e.g. butyl acetate and/or methyl isobutyl ketone and/or xylene and/or acetone.

14. Method for producing an anti-corrosion coating on a surface of a metal selected from the group consisting of aluminium and alloys of aluminium, comprising the steps of

- applying a mixture as defined in Claims 7 to 13 to at least part of the metal surface,
- optionally curing the binder.

15. Use of an anti-corrosion coating comprising

- an optionally cured binder or binder system,
- particles, distributed in the optionally cured binder or binder system, of an anti-corrosion pigment made of an alloy of zinc and magnesium with a zinc content of 74 to 90 wt%, preferably no chromium compounds,
- optionally further particulate solids,

wherein the volume-based fraction of the particles of the said anti-corrosion pigment in the entirety of the solids particles present in the anti-corrosion coating is 70% or more, preferably 80% or more, more preferably 90% or more and very preferably 95% or more,

wherein the pigment volume concentration in the anti-corrosion coating amounts to 90% to 110% of the pigment volume concentration needed in order to attain the percolation threshold,

wherein the particles of the said anti-corrosion pigment being lamellar particles,
for the corrosion protection of metals selected from the group consisting of aluminium and alloys of aluminium.

**Revendications**

1. Objet comprenant :

   - un corps de base en un métal choisi dans le groupe constitué par l'aluminium et les alliages d'aluminium ou comprenant des zones en un métal choisi dans le groupe constitué par l'aluminium et les alliages d'aluminium, et
   - un revêtement anticorrosion agencé sur le corps de base constitué de métal ou les zones métalliques du corps de base, pour les métaux choisis dans le groupe constitué par l'aluminium et les alliages d'aluminium, comprenant :

     - un liant ou un système de liant éventuellement durci,
     - des particules d'un pigment anticorrosion en un alliage de zinc et de magnésium ayant une teneur en zinc de 74 à 90 % en poids, de préférence de 74 à 80 % en poids et notamment de 74 % en poids, réparties dans le liant ou le système de liant éventuellement durci,
     - de préférence aucun composé de chrome,
     - éventuellement d'autres solides particulaires,

   la proportion relative au volume des particules dudit pigment anticorrosion par rapport à la totalité des particules solides présentes dans le revêtement anticorrosion étant de 70 % ou plus, de préférence de 80 % ou plus, de manière davantage préférée de 90 % ou plus et de manière particulièrement préférée de 95 % ou plus,
   la concentration volumique en pigment dans le revêtement anticorrosion étant de 90 à 110 % de la concentration volumique en pigment nécessaire pour atteindre le seuil de percolation,
   les particules dudit pigment anticorrosion étant des particules lamellaires,
   le revêtement anticorrosion recouvrant au moins partiellement le corps de base constitué de métal ou les zones métalliques du corps de base.

2. Objet selon la revendication 1, **caractérisé en ce que** la concentration volumique en pigment dans le revêtement anticorrosion est comprise entre 30 et 82,5 % en volume.

3. Objet selon l'une quelconque des revendications précédentes, **caractérisé en ce qu'**au moins 50 % des particules du pigment anticorrosion, de préférence au moins 90 % des particules du pigment anticorrosion, présentent une dimension maximale comprise entre 1 et 100 $\mu$m, de préférence entre 10 et 20 $\mu$m, mesurée par diffraction laser.

4. Objet selon l'une quelconque des revendications précédentes, **caractérisé en ce que** le liant ou le système de liant est choisi dans le groupe constitué par les polyuréthanes, les époxydes, les amines, les amides, les esters de silice, les résines de silicone, les résines alkydes, les polyesters, les acrylates, les silicates, les caoutchoucs naturels modifiés, les dispersions de plastique, les phénols, les mélamines, les polyvinylacétals, les polychlorures de vinyle ; les esters de silice, ainsi que les systèmes de liant qui comprennent des époxydes et des amidoamines et des liants minéraux du groupe des silicates, étant préférés.

5. Objet selon l'une quelconque des revendications précédentes, **caractérisé en ce que** le liant durci est le produit de durcissement d'un système bicomposant constitué par une résine d'époxyde de bisphénol A et un durcisseur polyamidoamine.

6. Objet selon l'une quelconque des revendications précédentes, **caractérisé en ce que** le revêtement anticorrosion comprend :

   un ou plusieurs agents thixotropiques choisis dans le groupe constitué par les silices pyrogénées, les phyllosilicates, les huiles de ricin hydrogénées, les dérivés de cellulose et les polyacrylates,
   et/ou
   un ou plusieurs agents de déshydratation choisis dans le groupe constitué par les zéolithes et les isocyanates.

7. Utilisation d'un mélange pour la fabrication d'un revêtement anticorrosion pour la protection contre la corrosion de métaux choisis dans le groupe constitué par l'aluminium et les alliages d'aluminium, comprenant :

- un liant ou système de liant,
- des particules d'un pigment anticorrosion en un alliage de zinc et de magnésium ayant une teneur en zinc de 74 à 90 % en poids, de préférence de 74 à 80 % en poids et notamment de 74 % en poids, réparties dans le liant ou le système de liant,
- de préférence aucun composé de chrome,
- éventuellement un ou plusieurs solvants,
- éventuellement d'autres solides particulaires,

la proportion relative au volume des particules dudit pigment anticorrosion par rapport à la totalité des particules solides présentes dans le mélange étant de 70 % ou plus, de préférence de 80 % ou plus, de manière davantage préférée de 90 % ou plus et de manière particulièrement préférée de 95 % ou plus, la concentration volumique en pigment relative aux constituants non volatils du mélange étant de 90 à 110 % de la concentration volumique en pigment nécessaire pour atteindre le seuil de percolation, les particules dudit pigment anticorrosion étant des particules lamellaires.

8. Utilisation d'un mélange pour la fabrication d'un revêtement anticorrosion selon la revendication 7, **caractérisée en ce que** la concentration volumique en pigment relative aux constituants non volatils du mélange est comprise entre 30 et 82,5 % en volume.

9. Utilisation d'un mélange pour la fabrication d'un revêtement anticorrosion selon quelconque des revendications 7 et 8, **caractérisée en ce qu'**au moins 50 % des particules du pigment anticorrosion, de préférence au moins 90 % des particules du pigment anticorrosion, présentent une dimension maximale comprise entre 1 et 100 $\mu$m, de préférence entre 10 et 20 $\mu$m, mesurée par diffraction laser.

10. Utilisation d'un mélange pour la fabrication d'un revêtement anticorrosion selon quelconque des revendications 7 à 9, **caractérisée en ce que** le liant ou système de liant est choisi dans le groupe constitué par les polyuréthanes, les époxydes, les amines, les amides, les esters de silice, les résines de silicone, les résines alkydes, les polyesters, les acrylates, les silicates, les caoutchoucs naturels modifiés, les dispersions de plastique, les phénols, les mélamines, les polyvinylacétals, les polychlorures de vinyle ; les esters de silice, ainsi que les systèmes de liant qui comprennent des époxydes et des amidoamines et des liants minéraux du groupe des silicates, étant préférés.

11. Utilisation d'un mélange pour la fabrication d'un revêtement anticorrosion selon quelconque des revendications 7 à 10, **caractérisée en ce que** le liant est un système bicomposant constitué par une résine d'époxyde de bisphénol A et un durcisseur polyamidoamine.

12. Utilisation d'un mélange pour la fabrication d'un revêtement anticorrosion selon quelconque des revendications 7 à 11, **caractérisée en ce que** le mélange comprend :

un ou plusieurs agents thixotropiques choisis dans le groupe constitué par les silices pyrogénées, les phyllosilicates, les huiles de ricin hydrogénées, les dérivés de cellulose et les polyacrylates, et/ou un ou plusieurs agents de déshydratation choisis dans le groupe constitué par les zéolithes et les isocyanates.

13. Utilisation d'un mélange pour la fabrication d'un revêtement anticorrosion selon quelconque des revendications 7 à 12, **caractérisée en ce que** les solvants comprennent des solvants véritables, p. ex. l'acétate de méthoxypropyle et/ou la méthyléthylcétone et/ou l'acétate d'éthyle, et des solvants latents, p. ex. l'acétate de butyle et/ou la méthylisobutylcétone et/ou le xylène et/ou l'acétone.

14. Procédé de fabrication d'un revêtement anticorrosion sur une surface d'un métal choisi dans le groupe constitué par l'aluminium et les alliages d'aluminium, comprenant les étapes suivantes :

- l'application d'un mélange tel que défini dans les revendications 7 à 13 sur au moins une partie de la surface métallique,
- éventuellement le durcissement du liant.

15. Utilisation d'un revêtement anticorrosion comprenant :

- un liant ou système de liant éventuellement durci,

- des particules d'un pigment anticorrosion en un alliage de zinc et de magnésium ayant une teneur en zinc de 74 à 90 % en poids, réparties dans le liant ou le système de liant éventuellement durci,
- de préférence aucun composé de chrome,
- éventuellement d'autres solides particulaires,

la proportion relative au volume des particules dudit pigment anticorrosion par rapport à la totalité des particules solides présentes dans le revêtement anticorrosion étant de 70 % ou plus, de préférence de 80 % ou plus, de manière davantage préférée de 90 % ou plus et de manière particulièrement préférée de 95 % ou plus, la concentration volumique en pigment dans le revêtement anticorrosion étant de 90 à 110 % de la concentration volumique en pigment nécessaire pour atteindre le seuil de percolation, les particules dudit pigment anticorrosion étant des particules lamellaires, pour la protection contre la corrosion de métaux choisis dans le groupe constitué par l'aluminium et les alliages d'aluminium.

**Fig. 1**

Fig. 2

Fig. 3

20 mm

Fig. 4

20 mm

Fig. 5

**Ruhepotentiale in 3%-iger NaCl-Lösung**

Fig. 6

EP 2 499 205 B1

**Ruhepotentiale in 3%-iger NaCl-Lösung**

Fig. 7

EP 2 499 205 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005051551 A
- WO 2005051551 A1